# EUROPEAN PATENT APPLICATION

(11) **EP 0 576 361 A2**
(43) Date of publication of application: **29.12.1993**
(21) Application number: 93401622.1
(22) Date of filing: 24.06.1993
(51) Int. Cl.: G01N 27/447

(54) **Electrophoretic electrode, method of/and system for capillary electrophoresis using the electrophoretic electrode and fraction collector assembled into the capillary electrophoresis system**

(30) Priority: 26.06.1992 JP 208382/92; 05.03.1993 JP 83747/93
(71) Applicant: NAKANO VINEGAR CO., LTD., Handa-shi, Aichi-ken 475 (JP)
(72) Inventor: Fujimoto, Chuzo, Godoshukusha Takamurojutaku 3-301, Toyohashi-shi, Aichi-ken (JP)
(74) Representative: Joly, Jean-Jacques

(57) **Abstract**

The electrophoretic electrode has two capillaries (2, 3) possessing different diameters and which are coaxially telescopically disposed to form a gap (14) having a predetermined width dimension between them, electrophoresis being caused in the gap 14. The electrode has an intermediate fractured portion, which is covered by a cover material, i.e., polyacrylamide gel containing an electrolytic buffer solution to form an electrically connected portion 8. The electrode may be used for electrophoresis to separate a large quantity of electrophoretically purified substance continuously and quickly.

## Description

### FIELD OF THE INVENTION

This invention relates to an electrophoretic electrode used for separating, analyzing and concentrating DNA fragments, proteins, hemoglobins, amino acids and other biopolymers and also organic substances as well as a method of/and an system for capillary electrophoresis using such electrophoretic electrode and a fraction collector assembled into the capillary electrophoretic system.

### BACKGROUND OF THE INVENTION

As is well known in the art, electrophoresis is usually used for separating, analyzing and concentrating DNA fragments, proteins and other biopolymers and also organic substances.

Recently, for obtaining higher performance of separation, capillary electrophoresis, also well known, is used, which uses an electrophoretic reservoir, a narrow-bore capillary tube and high voltage power supply.

Capillary electrophoresis is carried out by applying a voltage of several hundred V/cm across the capillary, which has an inner diameter of 0.03 to 0.1 mm and a length of about 50 cm, after introducing several nanoliters of sample from one end of the capillary.

Capillary electrophoresis, compared to the conventional electrophoresis, provides high separation performance, reduced analysis time and analysis of even small quantities of sample ("Biochemistry", Vol. 63, No. 7, p-p 529-534, (1991)).

However, in capillary electrophoresis it is necessary to use larger inner diameter capillary in case where the sample greatly contains miscellaneous matter other than the desired components or where the desired components have to be separated from a comparatively large quantity of sample at a time. In such a case, the separation ability is greatly sacrificed due to poor dissipation of Joule heat generated in the capillary, thus making it impossible to isolate desired components in a comparatively large quantity of sample at a time.

To solve this problem, there has been proposed a method, in which a plurality of capillaries used for capillary electrophoresis are arranged in bundles for electrophoretic separation of a comparatively large quantity of sample at a time (Norberto A. Guzman "Analytica Chimica Acta", 249, 247-255, (1991)).

However, in electrophoresis of "multiple capillary type", equal quantities of sample are supplied to a plurality of capillaries for independent separation through a plurality of different paths. Therefore, for elusion time of desired component being the same in any capillary of bundle the size and surface state of the capillaries should be identical, and further it is necessary to maintain absolutely the same sample supplying and separating conditions. It is quite difficult to attain such conditions, and this is the more difficult the greater the number of capillaries used.

Further, while capillary electrophoresis provides high separation performance as noted above, the sample is dealt with in small quantities, making it difficult to collect the separated substances.

One approach to perform fraction collection by capillary electrophoresis involved interruption of the applied voltage and transferring the outlet end of the electrophoretic capillary from one reservoir to another (Tadao Akiyama, Akira Omori "Proceedings of the 11th symposium on Capillary Electrophoresis" Tokyo Japan, Dec. 1991;1991, 73-74) another approach tried was by depositing fractions on a membrane assembly at the outlet end of a capillary to complete the electrical circuit for electrophoretic separation (Japanese Patent Laid-Open No. 264253/92).

However, in the former method the collected components are diluted, and therefore concentrating and dechlorinating are necessary. In the latter method, on the other hand, it is necessary to recover the separated components from the membrane, and the involved operation is very cumbersome.

These basic problems in the prior art separation methods arise in that fraction collection in capillary electrophoresis is not as straight forward as it is with high performance liquid chromatography: in order to complete the electrical circuit, the outlet end of the electrophoretic capillary must be kept in electric contact with the cathode/anode immersed in buffer solution.

Accordingly, the inventors announced in "Journal of High Resolution Chromatography", No. 3, March 1992, Volume 15, a capillary type electrophoretic electrode, which permits separation of a large quantities of sample without being affected by Joule heat even under a high voltage condition, as well as requiring no skill, being easy to handle and being capable of separating a small quantities of substance with high accuracy.

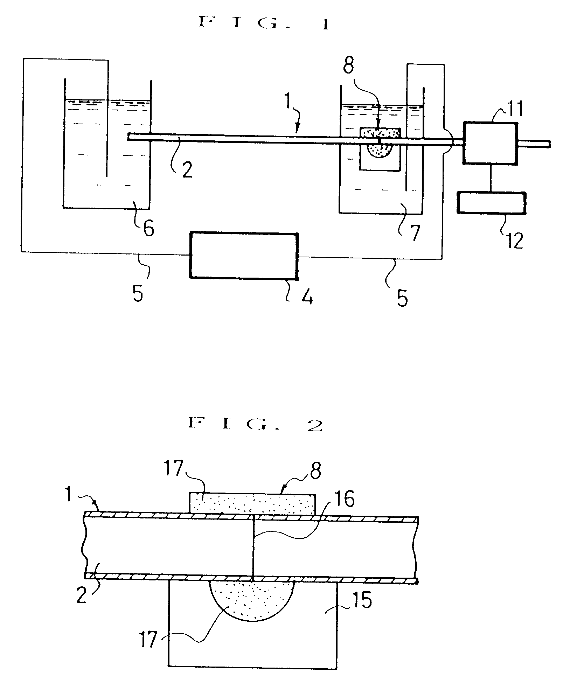

Fig. 1 shows the capillary type electrophoresis system proposed by the inventors. As shown, the system comprises an electrophoretic electrode column 1 constituted by a single capillary 2, a high voltage power supply 4 for applying a voltage across the column 1, platinum wires 5 as electrodes having one end electrically connected to the power supply, buffer reservoirs 6 and 7 for immersing the column 1 therein for causing electrophoresis, an electrically connected portion 8 electrically connecting the column 1 and the buffer reservoir 7, a detector 11 for optically detecting electrophoretically separated sample, and a controller 12 for recording and displaying the result of analysis based on the detection by the detector 11.

The capillary 2 is filled with an electrolytic buffer solution. It is made of fused quartz silica and has an inner diameter of 0.03 to 0.1 mm.

Between the buffer reservoirs 6 and 7 a gap 14 is formed, in which electrolytic buffer solution is accommodated.

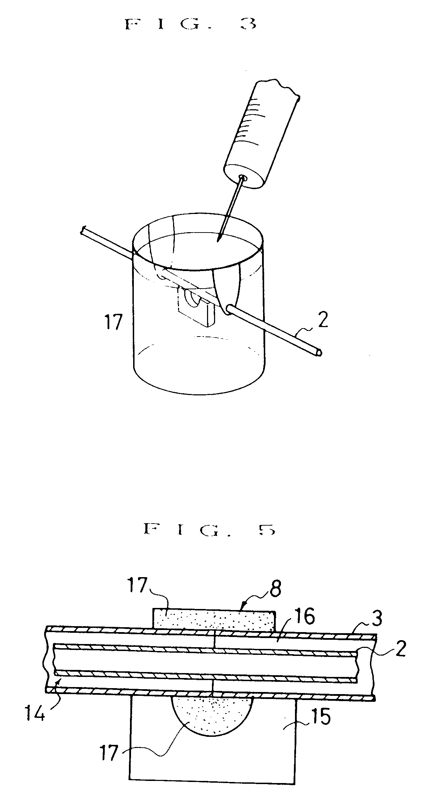

The electrically connected portion 8, as shown in Fig. 2, is formed by bonding a horseshoe-shaped member 15 to a column 1, then separating a polyimide or like cover, if any, on the outer side surface of the capillary 2 by touching the tube 2 with an over-heated electrode heating wire, then forming fractured portion 16 using, for instance, a capillary cleaving tool (manufactured by Shimadzu Seisakusho K.K.), and then covering the fracture 16 with polyacrylamide gel containing an electrolytic buffer solution.

With the electrically connected portion 8 formed on an intermediate portion of the column 1 in the above way, there is no need of immersing one end of the column 1 in the buffer reservoir 7. Consequently, it is possible to carry out the separation, collection and detection of sample continuously.

### SUMMARY OF THE INVENTION

An object of the invention is to provide a coaxial capillary electrophoretic electrode, which permits separation of a large quantity of sample at a time with higher efficiency than the above capillary electrophoresis method proposed earlier by the inventors as well as requiring no skill, being handled easily and permitting separation of a small quantities of substance with high accuracy, a method of and an system for capillary type electrophoresis method using the same electrophoretic electrode, and a fraction collector provided in the same capillary type electrophoresis system.

To attain the above object, the coaxial capillary electrophoretic electrode used for the capillary type electrophoresis method according to the invention can be constructed by coaxially telescopically disposing two capillaries having different diameters. In this case, a gap having a predetermined width size is formed between the inner and outer capillaries, electrophoresis of the sample being carried out in the gap.

The electrophoretic electrode used according to the invention, the cover material covering the fractured portion noted above is desirably polyacrylamide gel containing an electrolytic buffer solution.

According to the invention, the coaxial capillary electrophoretic electrode noted above is used for electrophoresis to separate electrophoretically purified substance continuously.

With the coaxial capillary electrophoretic electrode noted above the electrophoresis of sample is caused in the gap defined between the inner and outer capillaries, while cooling the sample in the gap by supplying a coolant into the inner capillary.

Further, according to the invention the system for carrying out the above method comprises either of the above electrophoretic electrode, means for supplying power to the electrophoretic electrode, an buffer reservoir for immersing the electrophoretic electrode therein, and detecting means for measuring electrophoretically separated sample.

Where the coaxial capillary electrophoretic electrode for the capillary type electrophoresis system according to the invention comprises an inner and an outer capillary, it is desirable to provide coolant supply means for cooling the sample and buffer solution in the gap.

Further, according to the invention it is desirable to provide a fraction collector downstream of the detecting means for continuously and automatically collecting electrophoretically purified substances.

The fraction collector has a collection element having recesses for recovering sample in drops.

Other objects and features of this invention will become understood from the following description with reference to the accompanying drawings.

### BRIEF DESCRIPTION OF THE DRAWINGS

Fig. 1 is a schematic view showing a capillary electrophoresis system as a first embodiment of by the inventor;
Fig. 2 is a sectional view, to an enlarged scale, showing an electrically connected portion provided right before an outlet of an electrophoretic electrode used in the same capillary electrophoresis system;
Fig. 3 is a view illustrating a step of covering an electrically connected portion of a capillary with polyacrylamide gel;
Fig. 4 is a schematic view showing a coaxial capillary electrophoresis system as one embodiment of the invention;
Fig. 5 is a sectional view, to an enlarged scale, showing a electrically connected portion provided right before an outlet of an electrophoretic electrode used in the same coaxial capillary electrophoresis;
Fig. 6 is a perspective view showing a fist example of fraction collector of the same coaxial capillary electrophoresis system;
Fig. 7 is a fragmentary sectional view, to an enlarged scale, showing a collection belt mounted on the fraction collector;
Fig. 8 is a front view showing the same fraction collector;
Fig. 9 is a fragmentary perspective view showing a different example of the collection belt in a wound form in the same fraction collector;
Fig. 10 is a perspective view showing a second example of the fraction collector;
Fig. 11 is a perspective view showing a further example of the separating member;
Fig. 12(a) is an electropherogram showing the result of separation obtained with the same coaxial capillary electrophoresis; and
Fig. 12(b) is an electropherogram showing the result of separation obtained with a prior art single capillary electrophoresis without any fractured portion.

### DETAILED DESCRIPTION OF THE PREFERRED EMBODIMENTS

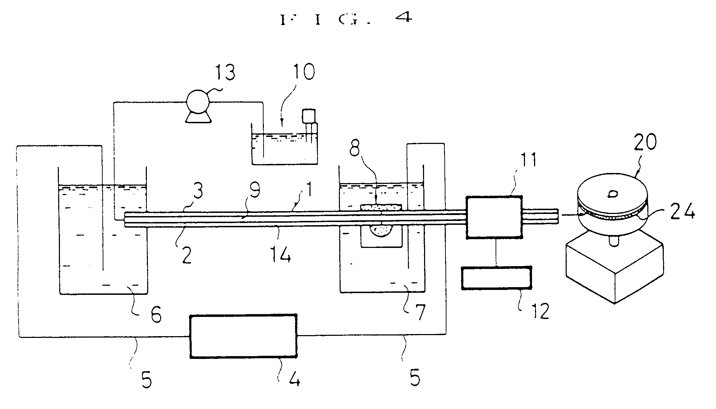

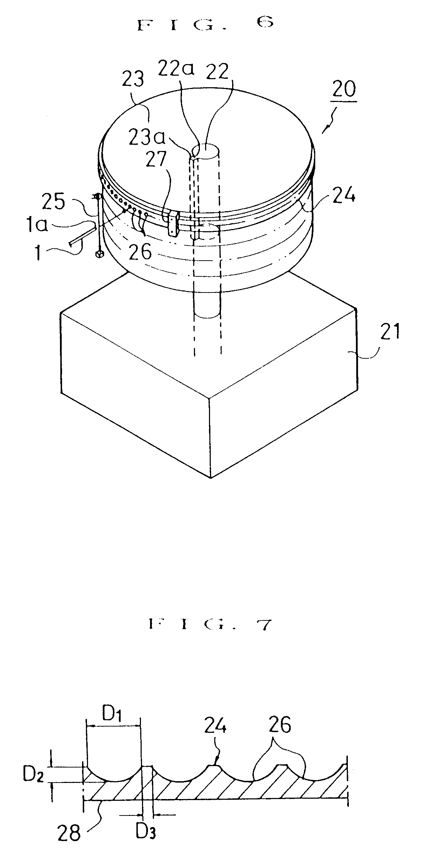

Fig. 4 shows a capillary electrophoresis system as an embodiment of the invention. In this capillary electrophoresis system, unless particular description is necessary, parts like those in the capillary electrophoresis system proposed earlier by the inventors designated by like reference numerals and are not described in greater detail.

The capillary electrophoresis system in this embodiment comprises a column 1 including two capillaries 2 and 3 having different diameters, a high voltage power supply 4 for applying a voltage across the column 1, a- pair of platinum wires 5 as cathode/anode end connected to the power supply 4, buffer reservoirs 6 and 7 for immersing the column 1 therein at the time of the electrophoresis, an electrically connected portion 8 for electrically connecting the column 1 and buffer reservoirs 6 and 7, a coolant reservoir 10 for supplying cooling water to the inner space 9 of the inner capillary 2, a detector 11 for optically detecting the sample separated by the electrophoresis, a controller 12 for calculating, recording and displaying the result of analysis based on the detection by the detector 11, and a fraction collector 20 disposed adjacent an end of the column 1 led from the detector 11 to the outside. Designated at 13 is a pump for supplying cooling water from the coolant reservoir 10 into the inner space 9 of the inner capillary 2.

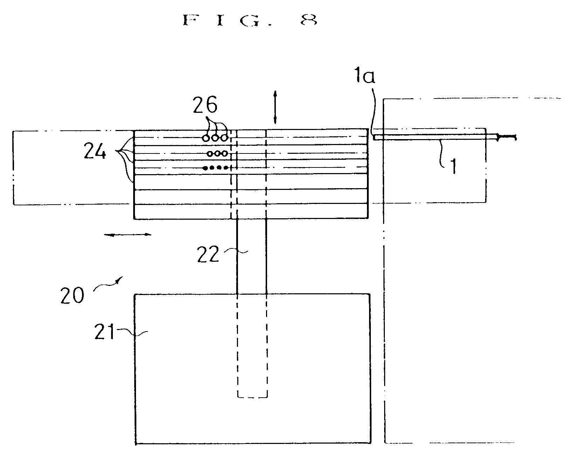

The column 1, as shown in Fig. 5, has a coaxial structure with the small diameter capillary 2 coaxially is inserted into the large diameter capillary 3 such as to form a gap between the outer periphery of the capillary 2 and the inner periphery of the outer capillary 3, electrophoresis being carried out in the gap 14.

The outer periphery of the capillary 2 and the inner periphery of the capillary 3, defining the gap 14, are spaced apart in a range of 0.03 to 0.2 mm, preferably 0.03 to 0.1 mm. This is done so in that the column used for the usual single tube capillary electrophoresis system has an inner diameter of 0.03 to 0.1 mm and that when the spacing is set within this range it is possible to attain separation of 40 to 50 times the sample in the volume ratio while maintaining the same resolution as in the case of the usual single tube capillary electrophoresis process.

The column 1 desirably has a sectional profile, which has less influence on the separation and permits ready molding, for instance a circular profile, for obtaining as large surface area as possible per volume and thus obtaining comparatively satisfactory heat dissipation. Of course, the column 1 may have a polygonal sectional profile.

To hold the gap 14 of the column 1 uniformly, fillers having a fixed thickness is provided in places; for instance, a plurality of needle-like protrusions (not shown) having a height of 0.03 to 0.2 mm are provided concentrically on the surface of the inner capillary 2. The protrusions are desirably formed in several locations in the longitudinal direction of the column 1 in correspondence to the length of the column 1 used. To minimize the influence on the separation performance, however, a minimum number of protrusions should be provided.

The capillaries 2 and 3 of the column 1 having the above structure are made of fused silica or any other material usually used for the columns in capillary electrophoresis. Further, for maintaining a clearance having a fixed thickness in the gap 14 of the column 1, a filler may be inserted, or a coating material may be coated.

The buffer reservoirs 6 and 7 and gap 14 are filled with the same buffer solution.

The coolant reservoir 10 serves to supply cooling water, for instance cooled down to 10 °C by a temperature controller (not shown), to the inner space 9 of the inner capillary 2 via a pump 13. Its detailed structure is the same as well-known liquid forcing system and not described here. The inner space 9 is not limitative for being cooled. From the standpoint of the cooling efficiency, however, it is desirable to cool the inner space 9.

With cooling water supplied to the inner space 9 of the inner capillary 2, there is no possibility of reduction of the separation performance that might otherwise be caused by Joule heat when a even higher voltage is applied. It is thus possible to greatly improve the separation performance and reproducibility. Of course, the same effects can be obtained by arranging such as to cool the column 1 from the outer side thereof with a chamber or the like.

The detector 11 effects the character and quantity determination to separate the intended substance for optical measurement of the fluorescence intensity and ultra-violet absorbance. This measuring instrument is well-known and not described in detail. Of course it is possible to use well known potential gradient sensor, conductivity sensor, a thermocouple sensor or combination of these sensors for the character and quantity determination of the intended substance.

The controller 12 comprises a well-known microprocessor (MPU) or the like. The result based on the detection by the detector 11 is output to a printer (not shown) or displayed on a display (not shown), e.g., a CRT. Also, it is adapted to record or otherwise store the result and calculate concentration or the like.

The fraction collector 20, in the coaxial capillary column as in this embodiment, requires the following considerations for improving the sample processing capacity for each unit operation while maintaining high separation performance.

Firstly, for maintaining high separation performance and reproducibility, the electrophoretic gap should be held at a fixed gap, that is, the column 1 should be held as a straight line. Secondly, during the electrophoresis the column should be held perpendicular to the gravitational direction. Thirdly, when a coaxial capillary electrophoresis with a fracture is used for separation, the distance from the fracture to the column outlet should be made as small as possible.

By taking the above three points into considerations, it is a condition necessary for the separation method in the coaxial capillary electrophoresis to provide an arrangement such that the eluent can be collected every 0.1 - µl of eluent per several seconds from the column 1 positioned perpendicular to the gravitational direction.

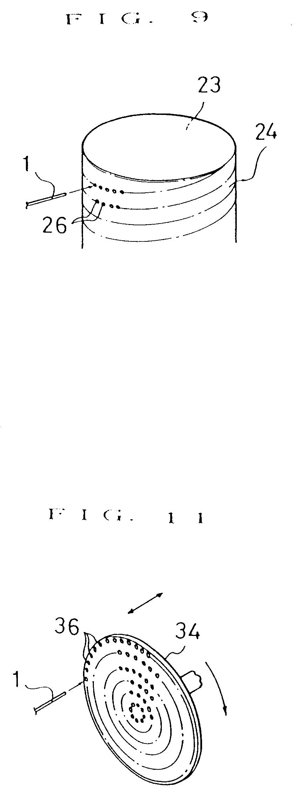

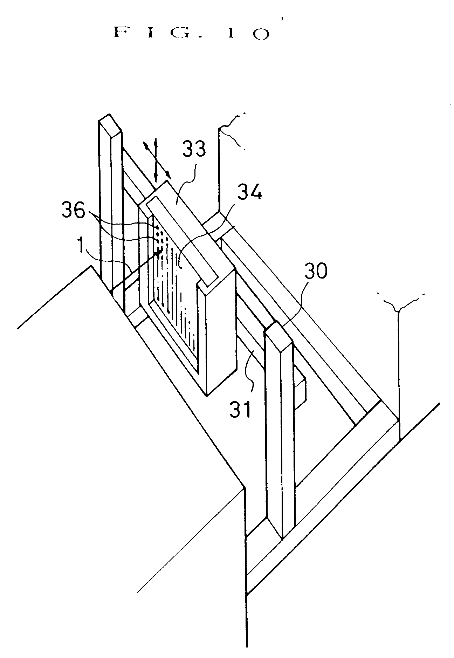

Figs. 6 to 8 show the fraction collector 20. As shown, the collector comprises a driving unit 21 including a pulse motor, a drum 23 secured to the shaft 22 of the driving unit for being driven intermittently in a fixed direction at a predetermined timing, and a plurality of collection belts 24 mounted on the periphery of the drum 23. The optimum distance between each collection belt 24 and the outlet end 1a of the column 1 is set by preliminary measurement. The back side of each collection belt 24 is formed adjacent an end thereof with a small hole 28 (see Fig. 7), which is fitted on an engagement projection (not shown) projecting from the outer periphery of the drum 23. After the projection and small holes 28 have been engaged, each collection belt 24 is secured with a securing member 27 to prevent releasing of the state of engagement.

It is of course possible to arrange such that the distance between each collection belt 24 and column 1 can be measured, if necessary, with a distance measurement device 25 including an optical sensor, etc. and that the drum 22 can be displaced back/forth or up or down with a driving unit(not shown) according to data obtained in the distance measurement device 25 such as to hold the optimum distance at the time of the separation.

The shaft 22 has a raised outer periphery portion 22a, which is fitted in a recessed portion 23a of the drum 23 for positioning the drum 23.

The collection belts 24, which are provided in a juxtaposed fashion on the drum 23, are desirably strip-like and made of a material, which has properties of hydrophobic, water-resistant, corrosion-resistant, low absorption, acid-resistant, alkali-resistant and low extraction properties as well as flexibility for being wound on the drum 23, e.g., silicone rubber, Teflon or Tygon.

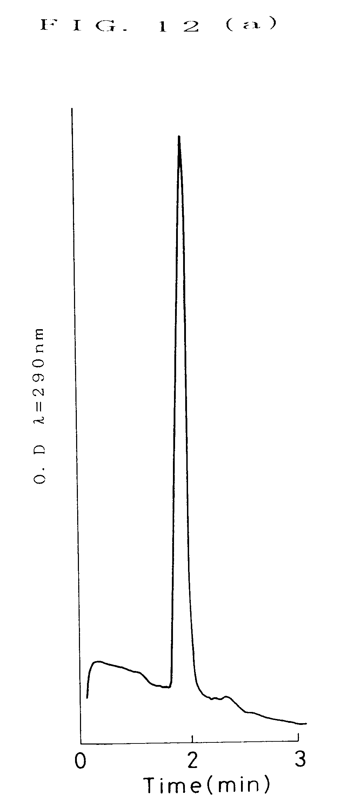

Each of the collection belts 24, as shown in Fig. 8, has a row of eluent collection recesses 26 formed at a predetermined interval in the longitudinal direction, each recess 26 being capable of recovering 0.05 to 0.5 µ l of eluent. Each eluent collection recess 26 has a circular or conical shape in correspondence to the size of liquid cell to be separated. It is adapted such that liquid to be recovered, having become a liquid cell due to the surface tension, touches a point or a surface of it or is stopped immediately before the touch to thereby provide a gap for the attachment of liquid drop, thereby recovering the sample. Of course, it is possible to make the size of the eluent collection recess 26 different with different collection belts 24.

For example, when each eluent collection recess 26 is to recover 0.1 µ of sample, it may be formed to be conical with the maximum diameter D₁ of 1 mm and the depth D₂ of 1 mm and the gap distance D₃ may be set to 1 mm or more. When adopting a method, in which the separated intended sample is diluted, the volume of the recess may be set to 1 to 5 µ l.

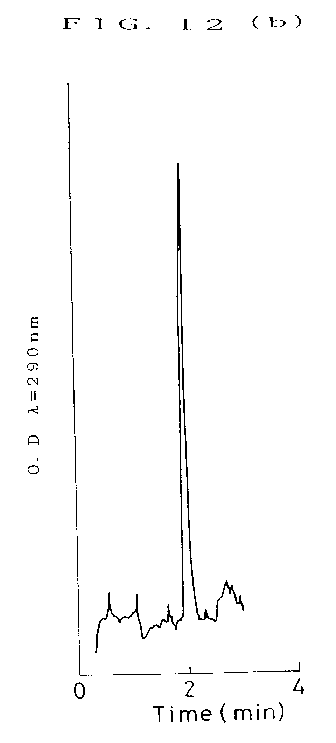

Further, as shown in Fig. 9, an elongated collection belt 24 may be wound helically on the drum 23.

The driving unit 21 drives the collection belt 24 mounted on the drum 23 intermittently, and it is controlled such that the individual eluent collection recesses 26 are successively brought into an accurate position corresponding to the end portion 1a of the column in correspondence to the gap between adjacent eluent collection recesses 26.

With the above construction of the fraction collector 20 it is possible to separate a small quantities of a specific substance continuously and highly accurately without diluting the eluent sample. According to the invention, by the term "capable of continuous separation, recovery and detection" is meant the capability of separation, recovery and detection without stopping the electrophoretic process, i.e., while providing high voltage.

Fig. 10 shows a different example of the fraction collector. This fraction collector 30 is resembled the same construction and function as the fraction collector 20 described before except that a plate-like collection member 34, which has a plurality of eluent collection recesses 36 formed in a matrix array, is secured to a separator holder 33, which is in turn coupled to an movable X-Y stage 30 and 31 for moving it in vertical and horizontal directions, the X-Y stage 30 and 31 being capable of being advanced and retreated in the direction of the column 1, thus permitting separation of minute quantities of the intended substance with the collection member 34, which is made of a material having properties of hydrophobic, water-resistant, corrosion-resistant, low absorption, acid-resistant, alkali-resistant, low extractable and less flexible.

Of course, it is possible to use a disk-like collection member 34, as shown in Fig. 11, having eluent collection recesses 36 arranged concentrically in the front surface in concentric circles.

While the above embodiment has concerned with the column 1 having the coaxial capillary structure comprising two capillary having different diameters, this is by no means limitative, and it is possible to construct the column with a plurality of capillary having different diameters.

### [EXPERIMENT EXAMPLE 1]

Using the capillary electrophoresis system in the above embodiment, experiments of amino acid separation and large quantity sample separation were conducted. The results are shown hereinunder.

For this embodiments, as the high voltage power supply 4 was used "Model HCZE-30PN 0.25" manufactured by Matsusada Precision Devices Inc. and the detector 11 was used ""Model 820-FP" manufactured by Jasco., and the capillary 2 of the capillary 1 was prepared by inserting a fused quartz silica capillary column (manufactured by GL Sciences.), with a length of 70 cm, an inner diameter of 0.25 mm and an outer diameter of 0.375 mm, in capillary 3 (manufactured by GL Sciences.), with a length of 70 cm, an inner diameter of 0.53 mm and an outer diameter of 0.63 mm so that the gap 14 had a dimension of 0.10 mm.

With the experiment set-up having the above constitution, the amino acid separation experiment was conducted under the following conditions.

As the sample was used a mixture containing 500 µ g/ml of N ε -DNS-L-lysine and an equal concentration of DNS-L-valine.

As the electrophoretic buffer solution was used 1 mM phosphate solution (provided by Kanto Chemicals) with pH 7.2.

The sample was injected by hydrodynamic introduction.

A vial containing the sample was inserted into the column 1, and then 0.1 µ l of sample was introduced into the gap 14 between the capillaries 2 and 3 by raising the container to a level higher by about 10 cm than the buffer reservoir 7.

Then, a voltage of 40 kV was applied between the buffer reservoirs 6 and 7 from the high voltage power supply 4 for electrophoresis, while holding the column 1 at a temperature of 10 °C by circulating cooling water through the inner space 9 of the capillary 2.

As a result, N ε -DNS-L-lysine was completely separated and detected at about 4 minutes from the begin of the electrophoresis. In addition, DNS-L-valine was completely separated from the N ε -DNS-L-Lysine peak and detected at about 6 minutes after the beginning of the electrophoresis.

Further, the reproducibilities of the migration time and peak height for several electrophoresis of with the same sample were within 0.4% and 8%, respectively. Thus, the high reproducibility could be demonstrated.

### [EXPERIMENT EXAMPLE 2]

A preparative separation experiment was conducted by using an amino acid mixture having five times the concentration (2.5 mg/ml) of the sample in the above Experiment Example 2. The same experimental set up as in the above Experiment Example 2 was used.

Compared to the capillary electrophoresis method in Experiment Example 1, in which the length and diameters of the gap 14 of the column 1 were the same as those in the present experiment example, about 50 times the quantity of sample could be separated at a time.

It could thus be confirmed that in the coaxial capillary electrophoresis in this experiment example a higher amounts could be separated at a time while maintaining high separation performance.

### [EXPERIMENT EXAMPLE 3]

Comparative tests with respect to the capillary electrophoresis in the first embodiment, were conducted using the coaxial capillary electrophoresis system in the above embodiment. The results are shown hereinunder.

In the capillary electrophoresis system used for the experiment, as the high voltage power supply 4 was used "Model HCZE-30PM 0.25" manufactured by Matsusada Precision Devices Inc., as the detector 11 was used a "Model 820-FP" manufactured by Jasco., and as the capillary 2 of the column 1 a polyimide-coating burned off fused silica capillary (manufactured by GL Sciences.), with a length of 415 mm, an inner diameter of 0.25 mm and an outer diameter of 0.330 mm, was inserted into the capillary 3, which was a fused quartz silica capillary (manufactured by GL Sciences.), with a length of 415 mm, an inner diameter of 0.53 mm and an outer diameter of 0.63 mm, the dimension of the gap 14 being thus set to 0.10 mm.

For a comparison there was used a single fused silica capillary (manufactured by GL Sciences) with a length of 415 mm, an inner diameter of 0.10 mm and an outer diameter of 0.375 mm.

Using the experimental set up having the above constitution, a contrast experiment of separating thymine:2,4-dihydroxy-5-methyl pyrimidine as one kind of pyrimidine base was conducted under the following conditions.

The sample was prepared by dissolving thymine in electrophoresis buffer at a concentration of 0.25 mg/ml.

As the electrolytic solution for the electrophoresis, 1 mM phosphate buffer with pH 5.84 was used by diluting it to 10 times.

The sample was injected by an electrodynamic introduction for 8 seconds at 0.6 kV.

Then, electrophoresis was caused by applying a voltage of 15 kV across the column 1 using the high voltage power supply 4, while holding the column 1 at a temperature of 10 °C by circulating cooling water through the inner space 9 of the capillary 2.

The sample detection was performed by absorption of 290 nm at a position of 300 mm before cathode end.

The results are shown in Fig. 12(a) and 12(b). As is seen, with the coaxial capillary electrophoresis system in this embodiment, a larger quantity of the intended sample could be separated than with the single capillary electrophoresis system in the first embodiment.

As has been described in the foregoing, according to the invention it is possible to separate a large quantity of sample without being affected by Joule heat under a higher voltage condition than in the case of the capillary electrophoresis process proposed earlier by the inventors as well as obtaining other excellent effects such as stable electroosmotic flow, high sample recovery, simplified structure and less trouble. Further, since the handling is easy and does not require skill, it is possible to readily obtain sample separation of this kind.

Further, the coaxial capillary electrophoresis system according to the invention is equipped with a fraction collector, and thus it is possible to separate a small quantities of a specific substance continuously and highly accurately without dilution of the eluent sample.

## Claims

1. An electrophoretic electrode used for a capillary electrophoresis comprising:
a column which composes an electrophoretic electrode including two capillaries having different diameters, which is set in coaxial condition,
an intermediate portion having certain wide for carrying out electrophoresis of a sample, which is formed between an inner capillary and an outer capillary,
a fractured portion which is formed in said column, and
an electrically connected portion which is formed by covering said fractured portion by using a cover material.

2. The electrophoretic electrode according to claim 1, wherein the cover material covering the fractured portion is polyacrylamide gel with electrolytic buffer solution.

3. A method of capillary electrophoresis for continuously separating an electrophoretically purified substances by using the electrophoretic electrode according to one of claims 1 and 2.

4. A method of capillary electrophoresis using the electrophoretic electrode according to claim 1, wherein electrophoresis of a sample is carried out in the gap formed between the inner and outer capillaries, while cooling the sample and a buffer solution in the gap by supplying a coolant into the inner capillary.

5. An system for capillary electrophoresis comprising the electrophoretic electrode according to one of claims 1 and 2, a means for supplying a high voltage to the electrophoretic electrode, a buffer reservoir for immersing the electrophoretic electrode, and a means for detecting the electrophoretically separated substances.

6. The capillary electrophoresis system according to claim 5, having the electrophoretic electrode including the inner and outer capillaries, and a means for cooling the sample and the buffer solution in the gap.

7. The capillary electrophoresis system according to one of claims 5 and 6, which further comprises a fraction collector located downstream the detection means.

8. The capillary electrophoresis system according to claim 7, wherein the fraction collector equipped with a collection medium having a recess for collecting electrophoretically purified substances in drops.
